# EUROPEAN PATENT APPLICATION

(11) **EP 2 081 040 A2**
(43) Date of publication of application: **22.07.2009**
(21) Application number: 09000304.7
(22) Date of filing: 12.01.2009
(51) Int. Cl.: G01S 1/00

(54) **Method and appratus for determining location information of a mobile device**

(30) Priority: 15.01.2008 US 14386
(71) Applicant: Broadcom Corporation, Irvine 92617 (US)
(72) Inventor: Lundgren, David Albert, Mill Valley, CA 94941 (US); Malkos, Steven, San Jose, CA 95125 (US); Lane, Chris, Ridgewood, NJ 07450 (US)
(74) Representative: Jehle, Volker Armin

(57) **Abstract**

A method and apparatus for determining a location of a mobile station ("MS") in a Global-Navigation-Satellite System is disclosed. The method includes obtaining an estimate of position associated with a mobile-country code ("MCC-position estimate"), wherein the mobile-country code is associated with a given country, and wherein the MCC-position estimate comprises an measure of uncertainty. The method also includes using the MCC-position estimate as a position of the mobile station ("MS position") when the measure of uncertainty satisfies a given threshold. The MCC-position estimate may include, for example, a centroid of population ("population centroid"); the population centroid and a uncertainty measure associated with the population centroid; a centroid of geography ("geographic centroid"), the geographic centroid and an uncertainty measure associated with the geographic centroid, and/or any combination thereof.

## Description

### CROSS-REFERENCE TO RELATED APPLICATIONS

This application is a continuation-in-part application of co-pending U.S. Patent Application Serial No. 11/333,787, filed January 17, 2006 (Attorney Docket GLBL022P2), which is a continuation-in-part application of co-pending U.S. patent application Serial No. 09/993,335, filed November 6, 2001, which is a continuation-in-part of U.S. Patent Application Serial No. 09/884,874, filed June 19, 2001, now U.S. Patent No. 6,560,534, which is a continuation-in-part of U.S. Patent Application Serial No. 09/875,809, filed June 6, 2001, now U.S. Patent No. 6,542,820.

This application is also a continuation-in-part application of co-pending U.S. Patent Application Serial No. 11/289,959, filed November 30, 2005, which is a continuation of U.S. Patent Application Serial No. 10/712,807, filed 13 November 2003, now U.S. Patent No. 6,992,617.

This application contains subject matter that is related to U.S. Patent Application Serial No. 09/715,860, filed November 17, 2000, now U.S. Patent No. 6,417,801. Each of the aforementioned related patents and/or patent applications is herein incorporated by reference.

### BACKGROUND

### Field

The present invention generally relates to position-location systems, and more particularly, to determining a location of a mobile station in a Global-Navigation-Satellite System ("GNSS"), such as the United States Global Positioning System ("GPS"), the Galileo positioning system ("GALILEO"), the GLObal'naya NAvigatsionnaya Sputnikovaya Sistema ("GLONASS"), the Space Based Augmentation System ("SBAS"), the Quazi-Zenith Satellite System ("QZSS"), the Local Area Augmentation System ("LAAS"), and the like.

### Related Art

A mobile station, such as a cell phone, may include a satellite-signal receiver for the purpose of determining a position of such mobile station ("MS"). To determine the position of the MS ("MS position"), the satellite-signal receiver needs satellite-navigation information, such as satellite orbits and clock models, to compute distances or "ranges" to each of several satellites. These distances in turn may be used to compute the MS position.

The distances are formed by computing time delays between transmission and reception of satellite signals broadcast from satellites in view of the MS and received by its satellite-signal receiver on or near the surface of the earth. The time delays multiplied by the speed of light yield the distances from the MS to each of the satellites that are in view.

In some current implementations, the satellite-signal receiver may acquire the satellite-navigation information directly from satellites by (i) obtaining the satellite signals broadcast from the satellites, and (ii) decoding satellite-navigation messages contained within such satellite signals. This broadcasted satellite-navigation information includes ephemeris data (or simply "broadcast ephemeris") and broadcast satellite time. This broadcast ephemeris includes standard satellite orbits and clock models, and the broadcast satellite time is an absolute time associated with the entire constellation of satellites. The satellite-signal receiver uses the broadcast satellite time to unambiguously determine exact time of broadcast (e.g., by time tagging the transmission and reception) for each of the satellite signals.

With knowledge of the exact time of broadcast of each of the satellite signals, the satellite-signal receiver uses the broadcast ephemeris to calculate a satellite position for each of the satellites (i.e., where each of the satellites was) when it broadcast its corresponding satellite signals. The satellite positions along with the distances to the each of the satellites allow the MS position to be determined.

By way of example, a satellite-signal receiver for the United States GPS ("GPS receiver"), i.e., one possible embodiment of the satellite-signal receiver, may receive from each orbiting GPS satellites in view of the GPS receiver a number of GPS signals that are formed using unique pseudo-random noise (PN) codes. These PN codes are commonly known as C/A codes, and each is used by the GPS receiver to uniquely identify which of the GPS satellites broadcast such the GPS signals. The GPS receiver determines the aforementioned time delays by comparing time shifts between or otherwise correlating sequences of (i) the PN codes of the broadcast GPS signals received at the GPS receiver and (ii) replicas of the PN codes locally generated by the GPS receiver.

At very low signal levels, the GPS receiver may obtain the PN codes of the broadcast GPS signals to provide unambiguous time delays by processing, and essentially averaging, many frames of the sequences of the PN codes. These time delays are called "sub-millisecond pseudoranges" because they are known modulo of the 1 millisecond boundaries of these frames. By resolving the integer number of milliseconds associated with each of the time delays to each of the satellite, then true, unambiguous pseudoranges may be determined. The process of resolving the unambiguous pseudoranges is commonly known as "integer millisecond ambiguity resolution."

A set of four pseudoranges together with knowledge of (i) the absolute times of transmissions of the GPS signals, and (ii) satellite positions at such absolute times is sufficient to solve for the position of the GPS receiver. The absolute times of transmission are used for determining the positions of the satellites at the times of transmission, and hence, for determining the position of the GPS receiver.

Each of the GPS satellites move at approximately 3.9 km/s, and thus, the range of such satellite, as observed from the earth, changes at a rate of at most ∼800 m/s. Errors in absolute time may result in range errors of up to 0.8 m for each millisecond of timing error. These range errors produce a similarly sized error in the GPS receiver position. Hence, absolute time accuracy of 10 ms is sufficient for position accuracy of approximately 10 m. Errors in the absolute timing of much more than 10 ms result in large position errors, and so, current and prior implementations have typically required the absolute time to have a minimum accuracy of approximately 10 milliseconds.

Downloading the broadcasted satellite-navigation information from one or more of the satellites is always slow (i.e., no faster than 18 seconds given that the GPS satellite-navigation message is 900 bits in length and broadcast in a 50 bit-per-second (bps) data stream). When in environments in which the GPS signals have very low signal strengths, downloading the broadcasted satellite-navigation information is frequently difficult and sometimes impossible. Response to these obstacles, some prior and current GPS implementations make use of a terrestrial wireless or wired communication medium for transmitting the broadcasted satellite-navigation information to a GPS receiver. These GPS implementations are commonly known as "Assisted-Global-Positioning Systems" or, simply, AGPSs.

Recently, at least one GNSS began using a AGPS (or an AGPS-like system) to provide to the satellite-signal receiver other types of assistance information along with or instead of the broadcasted satellite-navigation information. This assistance information may include acquisition-assistance information to assist in acquiring the satellite signals; the broadcasted satellite-navigation information; other types of the satellite-navigation information, including, for example, long-term orbit and clock models (collectively "LTO information").

In addition, at least one GNSS has been adapted to distribute to the satellite-signal receiver via a terrestrial wireless medium one or more "Cell IDs" associated with base-station substations ("BSSs"). In general, each of the BSSs includes one or more cell towers and/or other network entities that together are adapted to provide wireless connectivity to the MS over a defined geographic region (commonly referred to as a coverage area or cell).

Each of the BSSs has a unique Cell ID, and the MS typically obtains the Cell ID of the closest BSS when operating in its coverage area. When moving from one cell to another, the MS typically obtains the Cell ID of the closest BSS in the latter cell.

Using the Cell ID, the MS can request from the GNSS (e.g, a database disposed therein) a position of the BSS. Assuming that the distance between the BSS and the MS may be fairly close, the GNSS may use the position of the BSS may as an estimate of the MS position.

Unfortunately, there may be cases in which the position of the BSS is not available or inaccurate. Similarly, the other types of assistance information may also be inaccurate or not available. For example, broadcast ephemeris may be outdated or otherwise invalid due to one or more unhealthy satellites.

When the assistance information is unavailable and/or inaccurate, the MS may have to resort to using its satellite-signal receiver to obtain and decode the satellite signals to determine the MS position, which defeats the purpose of the AGPS. And as noted above, determining the MS position by decoding the satellite signals is always slow, which is generally unacceptable for many of today's location-based applications.

When the assistance information is available but inaccurate, the MS may not be able to acquire the satellite signals and/or the MS position may not be determined correctly, accurately or at all. Furthermore, even if the the MS position can be determined using inaccurate assistance information, such determination may take an inordinate amount of time due to having to repeatedly obtain fresh measurements from the satellites ("satellite-measurement data") and iterate the inaccurate assistance information with the fresh satellite-measurement data

Such deficiencies, like decoding the satellite signals, are generally unacceptable for many of today's location-based applications. And in terms of emergency services, these deficiencies can delay or even prevent dispatch of emergency services to the MS position, which, of course, is highly undesirable.

Therefore, there exists a need in the art for a method and apparatus for determining the MS position as a function of an estimate of position or other form of assistance information that are not inaccurate or incomplete. Alternatively, there exists a need in the art for a method and apparatus for determining the MS position as a function of an estimate of position or other forms of assistance information as a substitute for assistance information that is inaccurate or incomplete.

### SUMMARY

A method and apparatus for determining a location of a mobile station ("MS") in a Global-Navigation-Satellite System is disclosed. The method includes obtaining an estimate of position associated with a mobile-country code ("MCC-position estimate"), wherein the mobile-country code ("MCC") is associated with a given country, and wherein the MCC-position estimate includes a measure of uncertainty. The method also includes using the MCC-position estimate as a position of the mobile station ("MS position"), when the measure of uncertainty satisfies a given threshold.

The MCC-position estimate may also include, for example, a centroid of population ("population centroid"); the population centroid and a uncertainty measure associated with the population centroid ("pop-uncertainty measure"); a centroid of geography ("geographic centroid"), the geographic centroid and an uncertainty measure associated with the geographic centroid ("geo-uncertainty measure"), and/or any combination thereof. Optionally, the method may further include determining, as a function of the MCC-position estimate, at least one second position of the MS. The method may do so to refine the MS position.

The method may further include using the population centroid as the MS position when the pop-uncertainty measure satisfies a given threshold. The pop-uncertainty measure may be indicative of a likelihood that the population centroid estimates a position within at least one boundary of the given network or a country to which the mobile-country code is associated. This likelihood may be formed as a function of a distance between the population centroid and a coordinate-system point at a boundary of a coverage area of the given network. Alternatively, the likelihood may be formed as a function of a distance between the centroid and a coordinate-system point of a boundary of the country to which the mobile-country code is associated.

According to an aspect, a method comprises:
obtaining an estimate of position associated with a mobile-country code, wherein the mobile-country code is associated with a given country, and wherein the estimate of position associated with a mobile-country code comprises a measure of uncertainty; and
using the estimate of position associated with a mobile-country code as a position of a mobile station when the measure of uncertainty satisfies a given threshold.

Advantageously, the position associated with a mobile-country code further comprises a centroid of population, and wherein the measure of uncertainty comprises a measure of uncertainty associated with the centroid of population.

Advantageously, the position associated with a mobile-country code further comprises a centroid of geography, and wherein the measure of uncertainty comprises an uncertainty measure associated with the centroid of geography.

According to a further aspect, a method comprises:
obtaining a centroid of a population, wherein the centroid is associated with a mobile-country code, and wherein the mobile-country code is associated with a given network; and
using the centroid as a position of a mobile station.

Advantageously, the centroid comprises an estimate of a position of the mobile station, the method further comprising: determining, as a function of the estimate, a second position of the mobile station.

Advantageously, the centroid comprises an estimate of a position of the mobile station, the method further comprising:
obtaining at least one pseudorange to a satellite; and
determining, as a function of the at least one pseudorange and the estimate, a second position of the mobile station.

Advantageously, the method further comprises:
receiving from a requestor a request for the position of the mobile station, wherein the request includes the mobile-country code; and
sending to the requestor a response to the request, wherein the response includes the centroid.

Advantageously, the requestor is the mobile station.

Advantageously, obtaining a centroid of a population comprises:
sending to a data store a request for the centroid, wherein the request includes the mobile-country code; and
receiving from the data store a response to the request, wherein the response includes the centroid.

Advantageously, the method further comprises obtaining a measure of uncertainty associated with the centroid, wherein using the centroid as a position of a mobile station comprises: using the centroid as the position of the mobile station when the measure of uncertainty satisfies a given threshold.

Advantageously, the mobile station is at a given position, and wherein the measure of uncertainty is indicative of a likelihood that the centroid estimates the given position.

Advantageously, the given network defines a coverage area, and wherein the likelihood is formed as a function of a distance between the centroid and a coordinate-system point at a boundary of the coverage area.

Advantageously, the mobile-country code is associated with a given country, and wherein the likelihood is formed as a function of a distance between the centroid and a coordinate-system point of a boundary of the given country.

According to an aspect, a method comprises:
sending a request for a position of a mobile station, wherein the request includes a mobile-country code associated with a given network; and
receiving a response to the request, wherein the response includes the position, and wherein the position comprises a centroid of a population that is associated with the mobile-country code.

Advantageously, the centroid comprises an estimate of a position of the mobile station, the method further comprising: determining, as a function of the estimate, a second position of the mobile station.

Advantageously, the centroid comprises an estimate of a position of the mobile station, the method further comprising:
obtaining at least one pseudorange to a satellite; and
determining, as a function of the at least one pseudorange and the estimate, a second position of the mobile station.

Advantageously, the method further comprises:
obtaining a measure of uncertainty associated with the centroid; and
using the centroid as the position when the measure of uncertainty satisfies a given threshold.

Advantageously, the mobile station is at a given position, and wherein the measure of uncertainty is indicative of a likelihood that the centroid estimates the given position.

Advantageously, the given network defines a coverage area, and wherein the likelihood is formed as a function of a distance between the centroid and a coordinate-system point at a boundary of the coverage area.

Advantageously, the mobile-country code is associated with a given country, and wherein the likelihood is formed as a function of a distance between the centroid and a coordinate-system point of a boundary of the given country.

According to a further aspect, a server comprises:
memory adapted to store executable instructions to:
   obtain a centroid of a population, wherein the centroid is associated with a mobile-country code, and wherein the mobile-country code is associated with a given network; and
   use the centroid as a position of a mobile station; and
a processor adapted to obtain from memory and to execute the executable instructions.

Advantageously, the centroid comprises an estimate of a position of the mobile station, and wherein the memory is further adapted to store executable instructions to determine, as a function of the estimate, a second position of the mobile station.

Advantageously, the centroid comprises an estimate of a position of the mobile station, and wherein the memory is further adapted to store executable instructions to:
obtain at least one pseudorange to a satellite; and
determine, as a function of the at least one pseudorange and the estimate, a second position of the mobile station.

Advantageously, the memory is further adapted to store executable instructions to obtain a measure of uncertainty associated with the centroid, and wherein the executable instructions to use the centroid as a position of a mobile station comprise: executable instructions to use the centroid as the position of the mobile station when the measure of uncertainty satisfies a given threshold.

Advantageously, the mobile station is at a given position, and wherein the measure of uncertainty is indicative of a likelihood that the centroid estimates the given position.

Advantageously, the given network defines a coverage area, and wherein the likelihood is formed as a function of a distance between the centroid and a coordinate-system point at a boundary of the coverage area.

Advantageously, the mobile-country code is associated with a given country, and wherein the likelihood is formed as a function of a distance between the centroid and a coordinate-system point of a boundary of the given country.

According to an aspect, an apparatus comprises:
memory adapted to store executable instructions to:
   send a request for a position of a mobile station, wherein the request includes a mobile-country code associated with a given country; and
   receive a response to the request, wherein the response includes the position, and wherein the position comprises a centroid of a population that is associated with the mobile-country code; and
a processor adapted to obtain from memory and to execute the executable instructions.

### BRIEF DESCRIPTION OF THE DRAWINGS

So the manner in which the above recited features are attained and can be understood in detail, a more detailed description is described below with reference to Figures illustrated in the appended drawings.

The Figures in the appended drawings, like the detailed description, are examples. As such, the Figures and the detailed description are not to be considered limiting, and other equally effective examples are possible and likely. Furthermore, like reference numerals in the Figures indicate like elements, and wherein:

Figure 1 is a block diagram illustrating an example of a system for determining a position of a mobile station in a Global-Navigation-Satellite System;

Figure 2 is a block diagram depicting an example of a mobile station adapted for use in a Global-Navigation-Satellite System;;

Figure 3 is a block diagram illustrating an example of a server adapted for use in a Global-Navigation-Satellite System;

Figure 4 is a flow diagram illustrating an example process 400 for determining a position of a mobile station in a Global-Navigation-Satellite System; and

Figure 5 is a message flow diagram illustrating an example process for determining a position of a mobile station in a Global-Navigation-Satellite System.

### DETAILED DESCRIPTION

### Example Architecture

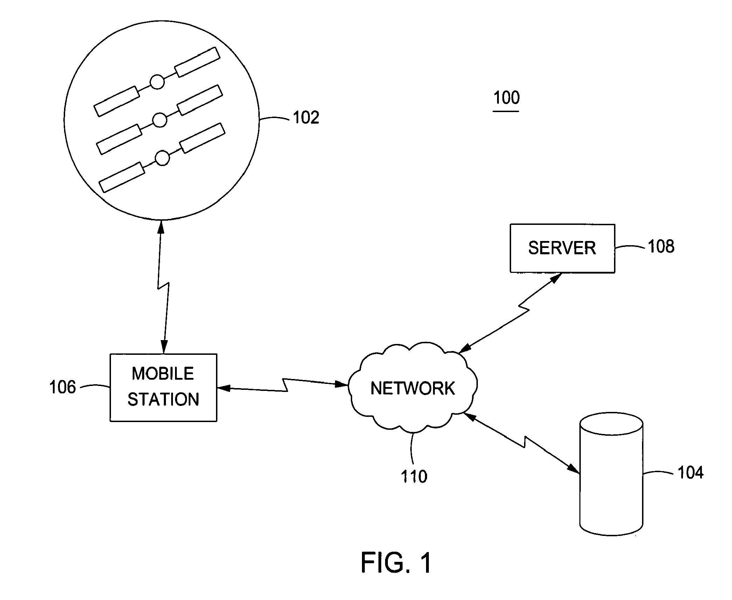

Figure 1 is a block diagram illustrating an example of a system 100 for determining a position of a mobile station. The system 100 may include a plurality or constellation of satellites 102, a data store 104, a mobile station ("MS") 106, and a server 108.

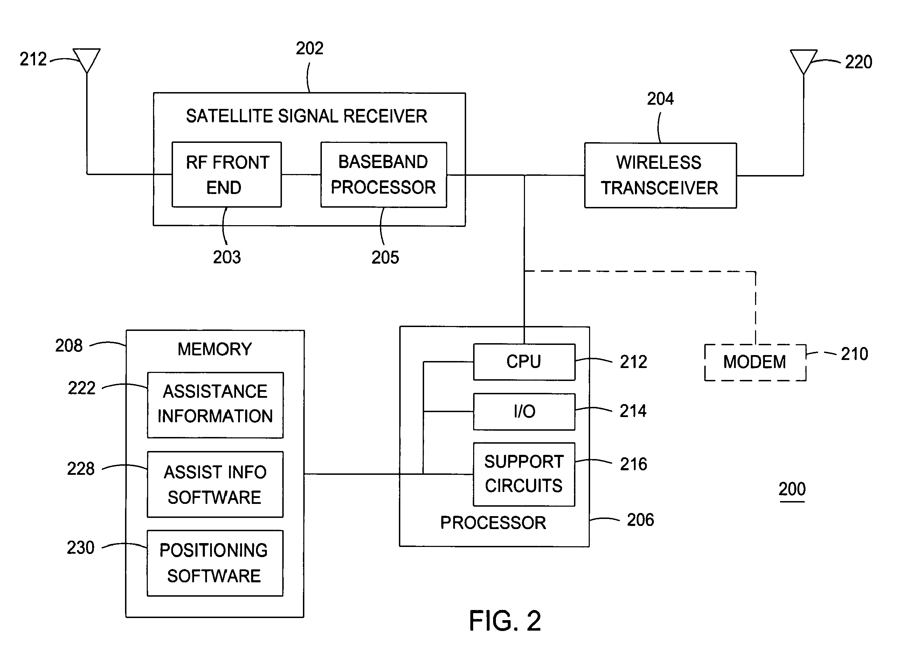

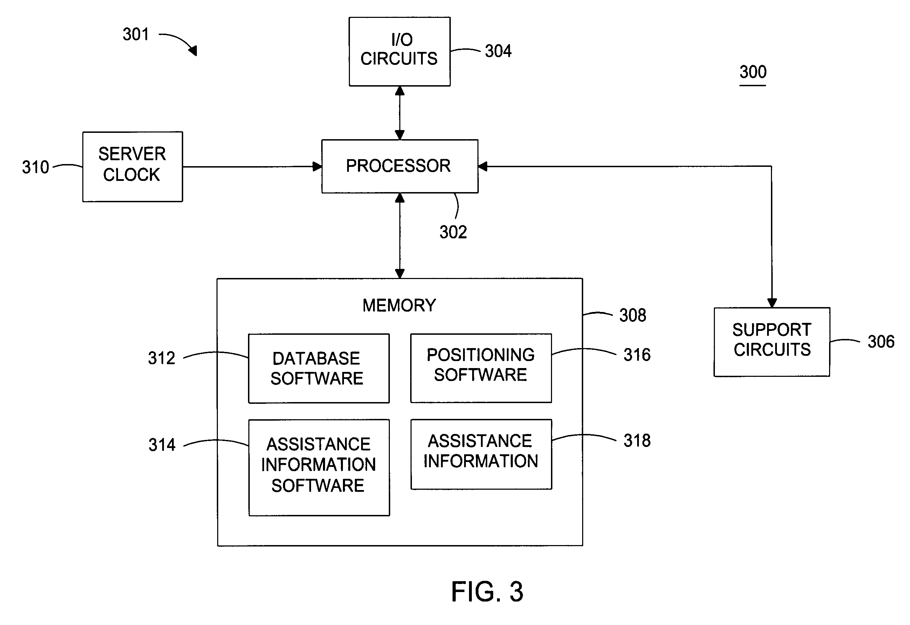

The MS 106 may include a number of elements for carrying out the following and other functions; none of which are shown in Figure 1 for simplicity of exposition. Details of example architecture of a mobile station, which may be representative of the MS 106, are described with reference to Figure 2. The server 108 may include a number of elements for carrying out the following and other functions; and like the MS 106, none of which are shown in Figure 1 for simplicity of exposition. Details of example architecture of a server, which may be representative of the server 108, are described with reference to Figure 3.

In addition, the system 100 is shown with only one mobile station and only one server for purposes of clarity. It is to be understood, however, that the system 100 may include and/or be deployed with a plurality of mobile stations and servers, and that each of these additional mobile stations and servers may communicate with the server 108 (and/or the additional servers) via a communication network 110.

The satellites 102, data store 104, the MS 106, the server 108, the system 100 as a whole, along with functions, procedures, components and other details provided herein may be tailored for any global-navigation-satellite system ("GNSS"). Examples of the GNSS include the United States Global Positioning System ("GPS"), the Galileo positioning system ("GALILEO"), the GLObal'naya NAvigatsionnaya Sputnikovaya Sistema ("GLONASS"), the Space Based Augmentation System ("SBAS"), the Quazi-Zenith Satellite System ("QZSS"), the Local Area Augmentation System ("LAAS"), and the like.

Each of the satellites 102 is adapted to broadcast or otherwise transmit satellite signals. These satellite signals may be formed in accordance with one or more protocols defined by the GPS, GALILEO, GLONASS, SBAS, QZSS, LAAS, etc., and/or one or more combinations thereof.

In general, the position of the MS 106 ("MS position") may be formed, computed, developed, solved or otherwise determined (collectively "determined") as a function of the satellite signals received from the satellites 102 and/or assistance information available from or at the server 108. The MS position may be determined using a MS-based mode or a MS-assisted mode.

As described in more detail below, the MS 106 determines the MS position using the MS-based mode, and the server 108 determines the MS position using the MS-assisted mode. In the MS-based mode, the server 108 is adapted to distribute assistance information to the MS 106, and the MS 106 is adapted to determine the MS position as a function of the assistance information and measurement data ("satellite-measurement data") obtained from the satellite signals received by the MS 106.

In the MS-assisted mode, the MS 106 is adapted to send the satellite-measurement data to the server 108, and the server 108, in turn, is adapted to use the satellite-measurement data and the assistance information to determine the MS position. Typically, the server 108 is capable of making computations more quickly than the MS 106 because it typically includes greater processing power and memory as compared to the MS 106.

The assistance information may include, for example, acquisition-assistance information to assist in acquiring the satellite signals; broadcasted satellite-navigation information and other types of the satellite-navigation information, including, for example, long-term orbit and clock models (collectively "LTO information"); and other information that the may be used to acquire the satellite signals and/or determine the MS position. This other information may include, for example, one or more estimates of position of the mobile station 106 (each an "MS-position estimate").

To facilitate the foregoing, the MS 106 may be adapted to obtain the satellite signals broadcast from the satellites 102 and/or obtain the satellite-measurement data. In addition, the MS 106 and server 108 may be adapted to exchange content ("ms-server content") via the communication network 110. This ms-server content may include, for example, the assistance data, the satellite-measurement data, a request for assistance information ("assistance-information request"), a response to such request ("assistance-information response"), etc.

The server 108 and data store 104 may be adapted to exchange, via the communication network 110, some or all of the ms-server content, including information extracted therefrom; and/or other content ("server-data-store content"). The server-data-store content may include, for example, (i) a query for an estimate of position of the MS 106 ("MS-position-estimate query"), and/or (ii) a response to such query ("MS-position-estimate response"). The MS-position-estimate query may be sent from the server 108 to the data store 104, and the MS-position-estimate response may be sent to the server 108 from the data store 104.

Although not shown, the server 108 and the data store 104 may be communicatively coupled together via another communication network (not shown) or a communication link (not shown), such as a computer bus or dedicated communication link. As such, the server 108 and the data store 104 may be adapted to exchange the ms-server content and/or the server-data-store content via such other communication network or link.

To facilitate the exchange of the ms-server content, the MS 106 and server 108 may be communicatively coupled via a first communication link. Similarly, the server 108 and the data store 104 may be communicatively coupled via a second communication link to facilitate the exchange of the ms-server content and/or the server-data-store content. The first and second communication links may be formed, for example, by communicatively coupling one or more nodes of the communication network 110.

The communication network 110 may include a partial or full deployment of a public or private, terrestrial wireless or satellite, and/or wireline telecommunications and/or computer network, and thus, can include a few or many network elements, most of which are not shown. Using sophisticated routing schemas, the communication network 110 may provide connectivity for the first and second communication links using only a few of its network elements.

The communication network 110 may be configured to allow the MS 106, server 108 and/or data store 104 to communicate and exchange the ms-server and server-data-store content using any number of protocols. These protocols may include any standardized, proprietary, open-source, and freely-available communication protocols for communicating content in circuit-switching and/or packet data networks.

The communication network 110 may, for example, include or be embodied as a personal-communications-services network, such as a Code Division Multiple Access ("CDMA") network or a Global System for Mobile communications ("GSM") network. Typically, the personal-communications-services network defines a number of cells. Each of the cells typically includes at least one base-station subsystem ("BSS"), which may include one or more cell towers and/or other network entities that together are adapted to provide wireless connectivity to the MS 106 over a defined geographic region (commonly referred to as a coverage area). This coverage area may have boundaries that are delineated by (i) a given region or portion of a country, (ii) one or more national borders, (iii) one or more international borders, and (iv) any combination thereof.

To facilitate operation within the coverage area, MS 106 and BSS are adapted to identify themselves to each other. The MS 106 is adapted to identify itself to the BSS by its International Mobile Subscriber Identity ("IMSI") number. The IMSI number, which is typically stored in the MS 106, may be communicated to the BSS when, for example, the MS 106 registers with or otherwise communicatively couples to the BSS.

The IMSI number uniquely identifies the MS 106 and associates the MS 106 with and/or provisions the MS 106 for a subscription for services provided by a telecommunication provider ("subscriber's telecommunication provider"). These services may be provided to the MS 106 when operating in a home portion of communication network 110 ("home network") or a roaming portion of communication network 110 ("roaming network").

In general, the home network is owned and/or operated by or for the telecommunication provider for its subscribers. The roaming network, on the other hand, is generally owned and/or operated by or for a telecommunication provider other than the subscriber's telecommunication provider, and typically requires contractual relationships between the subscriber's telecommunication provider and the other telecommunication provider to allow the mobile station 106 to access and use its roaming network.

Details of the IMSI number are provided in the ITU E.212. The IMSI number includes a Home Network Identity ("HNI") followed by a mobile subscriber identification number ("MSIN"). The HNI, which identifies the home network, is defined by a mobile-country code assigned to the MS 106 ("MS-MCC") followed by a Mobile Network Code ("MNC").

Typically, the IMSI is 15 digits long, but can have fewer digits. The MS-MCC is three digits and is assigned to, mapped to or otherwise associated with a country ('MCC country") in which the home network of the MS 106 resides. The MNC may be 2 digits for Europe or 3 digits in the United States of America ("USA"), and is assigned to, mapped to or otherwise associated with the home network of the MS 106. The remaining digits are the MSIN, which is commonly referred to as the phone number of the MS 106.

Although the MS-MCC is assigned to, mapped to or otherwise associated with the MCC country and the MNC is assigned to, mapped to or otherwise associated with the home network of the MS 106, neither the MS-MCC nor the MNC alone fully identify the home network. This is because a country can be assigned more than one mobile country code (e.g., the USA has two codes) and more than one MNC. The HNI fully identifies the home network because the combination of the MS-MCC and the MNC is unique.

As noted above, the BSS may be adapted to identify itself to the MS 106. The BSS may be adapted to broadcast or otherwise disseminate (and the MS 106 may be adapted to obtain from the BSS) a mobile-country code associated with the coverage area of the BSS ("BSS-MCC"). This BSS-MCC, like the MS-MCC, may be defined in accordance with the ITU E.212.

As described in more detail below, the MS 106 may be adapted to send the MS-MCC and/or the BSS-MCC to the server 108 via the assistance-information request to obtain the MS-position estimate. In addition, the server 108 may be adapted to send the MS-MCC and/or the BSS-MCC (or relay the assistance-information request) to the data store 104 via the MS-position-estimate query. In turn, the data store 104 may be adapted to send the MS-position estimate to the server 108 via the MS-position-estimate response. The server 108 may be adapted to send the MS-position estimate (or relay the MS-position-estimate response) to the MS 106.

To facilitate the foregoing, the data store 104 may include a database server or other database interface capable of servicing requests from the server 108 (collectively "database server"). The database server may include one or more database management systems ("DBMS"), such as any of Oracle, DB2, Microsoft Access, Microsoft SQL Server, Postgres, MySQL, 4th Dimension, FileMaker and Alpha Five DBMSs; and the like.

In addition, the data store may include memory (e.g., a database, table and the like) adapted to store one or more mobile-country codes (each a "data-store MCC"). Each of the data-store MCCs may be defined, for example, in accordance with the ITU E.212. As such, each of the data-store MCCs is a code that is assigned to, mapped to or otherwise associated with a particular MCC country.

The data store 104 may also be adapted to store in association with each of the data-store MCCs a position estimate ("MCC-position estimate"). The MCC-position estimate may include, for example, at least one centroid of population ("population centroid"). The MCC-position estimate may also include at least one measure of uncertainty associated with the population centroid ("pop-uncertainty measure").

The population centroid defines a location associated with a center of population that is associated with a given region of the MCC country. The given region may be a subset or the entire area of the MCC country. For example, the given region may be any of or any combination of a town, county, state, province, territory and the like.

The population centroid may be expressed as a point or a region of a coordinate system. The point, region and coordinate system may be expressed in terms of latitude, longitude, altitude and/or any combination thereof. Alternatively, the point, region and coordinate system may be expressed in terms of a map.

The pop-uncertainty measure is indicative of a likelihood (e.g., a probability) that the population centroid, as compared to a boundary associated with the MCC country, is usable as an accurate estimate of any location within the boundary associated with the MCC country. The boundary associated with the MCC country may be one or more boundaries of the given region of the MCC country and/or one or more boundaries defined by the coverage area of a cell or combination of cells of the communication network 110.

The pop-uncertainty measure is "indicative" of the likelihood that the population centroid is usable as an accurate estimate of any location within the boundary associated with the MCC country because the pop-uncertainty measure may be expressed in terms other than probability. For example, the pop-uncertainty measure may be scaled, transformed, converted, etc. Alternatively, the likelihood may not be based upon traditional statistics, but instead may be, for example, based on one or more empirical results and/or one or more guesses.

The pop-uncertainty measure may be indicative, for example, of a high, low or in-between likelihood that the population centroid is usable as an accurate estimate of any location within the boundary associated with the MCC country. The high likelihood is a likelihood that, for example, any distance between the population centroid and the boundary is negligible, insignificant, or can be compensated for when computing the MS position.

The low likelihood is a likelihood that one or more distances between the population centroid and the boundary are not negligible, are significant and/or cannot be otherwise compensated for when computing the MS position. The in-between likelihood is a likelihood that is between the high and low likelihoods, and that any distance between the population centroid and the boundary may be negligible, insignificant, or otherwise compensated for when computing the MS position.

As an alternative, the MCC-position estimate may include at least one centroid of geography ("geographic centroid") and/or at least one measure of uncertainty associated with the geographic centroid ("geo-uncertainty measure"). The geographic centroid defines a location associated with a center of geography that is associated with a given region of the MCC country. The given region may be a subset or the entire area of the MCC country. For example, the given region may be any of or any combination of a town, county, state, province, territory and the like.

The geographic centroid may be expressed as a point or a region of a coordinate system. The point, region and coordinate system may be expressed in terms of latitude, longitude, altitude and/or any combination thereof. Alternatively, the point, region and coordinate system may be expressed in terms of a map.

The geo-uncertainty measure is indicative of a likelihood (e.g., a probability) that the geographic centroid, as compared to a boundary associated with the MCC country, is usable as an accurate estimate of any location within the boundary associated with the MCC country. The boundary associated with the MCC country may be one or more boundaries of the given region of the MCC country and/or one or more boundaries of a cell or combination of cells of the a network 110.

Like the pop-uncertainty measure, the geo-uncertainty measure is "indicative" of the likelihood that the geographic centroid is usable as an accurate estimate of any location within the boundary associated with the MCC country because the geo-uncertainty measure may be expressed in terms other than probability. For example, the geo-uncertainty measure may be scaled, transformed, converted, etc. Alternatively, the likelihood may not be based upon traditional statistics, but instead may be, for example, based on one or more empirical results and/or one or more guesses.

The geo-uncertainty measure may be indicative, for example, of a high, low or in-between likelihood that the geographic centroid is usable as an accurate estimate of any location within the boundary associated with the MCC country. The high likelihood is a likelihood that, for example, any distance between the geographic centroid and the boundary is negligible, insignificant, or can be compensated for when computing the MS position.

The low likelihood is a likelihood that one or more distances between the geographic centroid and the boundary are not negligible, are significant and/or cannot be otherwise compensated for when computing the MS position. The in-between likelihood is a likelihood that is between the high and low likelihoods, and that any distance between the geographic centroid and the boundary may be negligible, insignificant, or otherwise compensated for when computing the MS position.

### Example Mobile Station Architecture

Figure 2 is a block diagram depicting an example of a mobile station ("MS") 200. The mobile station 200 may be representative of the MS 106 104 of Figure 1. For convenience, the MS 200 is described with reference to the system 100 of Figure 1.

The MS 200 may be embodied as a may be, for example, any of or any combination of a personal computer; a portable computer, a handheld computer; a mobile phone, a digital assistant, a personal digital assistant, a cellular phone, a smart phone, a pager, a digital tablet, a laptop computer, an Internet appliance and like-type wireless device. The MS 200 may include a large number of elements; most of which are not shown for simplicity of exposition. As shown, the MS 200 includes a satellite-signal receiver 202, a wireless transceiver 204, a processor 206, a memory 208, and optionally, a modem 210 (or other communication port or device).

The satellite-signal receiver 202 includes circuitry to facilitate receiving and processing the satellite signals broadcast from the satellites 102. Typically, the satellite-signal receiver 202 includes a radio frequency (RF) front end 203 coupled to a baseband processor 205.

The RF front end 203 is adapted to acquire the satellite signals and pass the satellite signals to the baseband processor 205. The baseband processor 205 is adapted to obtain the satellite signals from the RF front end 203 and use such signals to generate the satellite-measurement data. The satellite-measurement data may include, for example, pseudorange measurements (e.g., clock errors and/or pseudo-distances between the MS 200 and the satellites 102). Any form of a positioning module is useful in this role.

Examples of the satellite-signal receiver 202 may be found in any of the GL20000, Hammerhead and Marlin available from Broadcom Corporation of Irving, California or the SiRFStarIII available from SiRF Technology Holdings Inc. of San Jose, California. Such examples also include any assisted-GNSS receiver described in United States Patent No.: 6,453,237, which is incorporated herein by reference. In addition to being adapted to generate the satellite-measurement data (e.g., pseudoranges measurements), the baseband processor 205 may be adapted to pass the satellite-measurement data to the processor 206.

The processor 206 may include a central processing unit ("CPU") 212, an input/output ("I/O") interface 214, support circuits 218, and at least one bus or serial communication link 216. The CPU 210 may be or include one or more conventional processors, microprocessors, multi-core processors and/or microcontrollers. The support circuits 216 may include well known circuits that facilitate operation of the CPU 212, such as at least one of cache, power supplies, clock circuits, and the like.

The bus or serial communication link 218 provides for transmissions of digital information, including information relating to determining the MS position, among the CPU 212, support circuits 216, memory 208, I/O interface 214, and other portions of the MS 200 (not shown).

The I/O interface 214 provides an interface to control the transmissions of digital information to and from the MS 200. The I/O interface 214 may interface with one ore more I/O devices, such as the modem 210, a keyboard, touch screen, and/or other device.

The transceiver 204 may be used to communicate with the communication network 110 and/or the other type of network. Using the transceiver 204, the MS 200 may obtain from the server 108 assistance information to assist in acquiring and/or processing the satellite signals.

Examples of a combination of a satellite-signal receiver and a transceiver, and an assistance server are provided in commonly-assigned U.S. Patent Nos. 6,411,892; 6,429,814; 6,587,789; 6,590,530; 6,703,972; 6,704,651; and 6,813,560; U.S. Patent Application Serial Nos. 09/993,335, filed November 6, 2001; 10/349,493, filed January 22, 2003; 10/359,468, filed on February 5, 2003; 10/692,292, filed October 23, 2003; 10/719,890, filed November 21, 2003; 10/926,792, filed August 26, 2004; 10/884,424, filed on July 1, 2004; 10/912,516, filed August 5, 2004; 10/932,557, filed on September 1, 2004; 10/968,345, filed on October 19, 2004; 11/077,380, filed on March 3, 2005; 11/206,615, filed on August 18, 2005; 11/261,413, filed on October 28, 2005; and U.S. Provisional Patent Application Serial No. 60/760,140, filed on January 19, 2006; all of which are incorporated herein by reference in their entirety.

As such, the satellite-signal receiver 202 and the transceiver 204 may include any number of components, including one or more oscillators that may be shared between or dedicated to the satellite-signal receiver 202 and the transceiver 204; oscillator synchronization circuits for synchronizing the oscillators; frequency detectors; frequency counters; correlators, highly-parallel or otherwise, which may include numerically-controlled oscillators for detecting the satellite signals; front-end circuitry for the transceiver 204; wireless and satellite-signal tuners; temperature models for adjusting the oscillators; co-processors; and the like.

The wireless transceiver 204 may transmit, using its antenna 220, the satellite-measurement data to the server 108 so as to allow the server 108 to determine the MS position in the MS-assisted mode. Alternatively the satellite-measurement data may be stored within the memory 208 and later used by the MS 200 to compute the MS position.

For example, the MS 200 may perform processing to compute the MS position using the pseudorange measurements that are generated by the satellite-signal receiver 202. That is, the MS 200 may use its processor 206, which is capable of performing functions other than the computation of MS position, to (i) load from the memory 208 (or obtain directly from the satellite-signal receiver 202) the pseudorange measurements that are generated by the satellite-signal receiver 202, and (ii) compute the MS position using these pseudorange measurements.

The transceiver 204 may be adapted to receive the assistance information from the server 108 via the communication network 110 or via the other type computer network (not shown) using the modem 210 (or other communication port or device that connects the device to a computer network).

The memory 208 may be embodied as random access memory, read only memory, an erasable programmable read only memory and variations thereof, content addressable memory and variations thereof, flash memory, disk drive storage, removable storage, hard disc storage etc., and any combination thereof. The memory 208 may be loaded with and store the assistance information 222, which can be used to assist in the acquisition of satellite signals or the computation of the MS position or both.

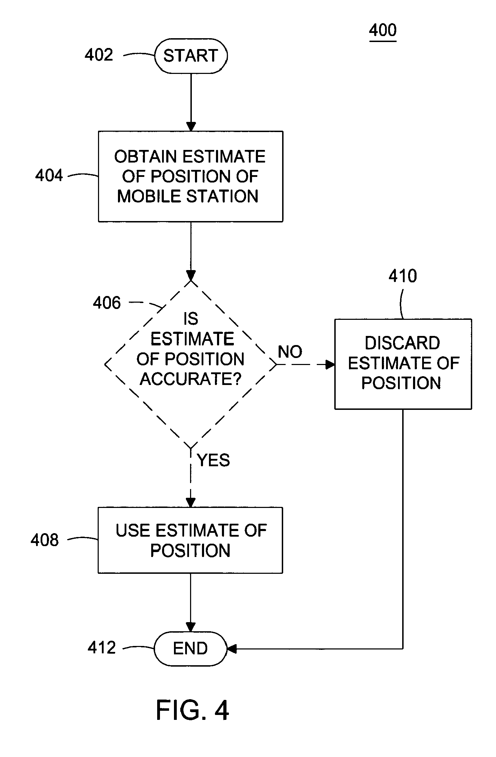

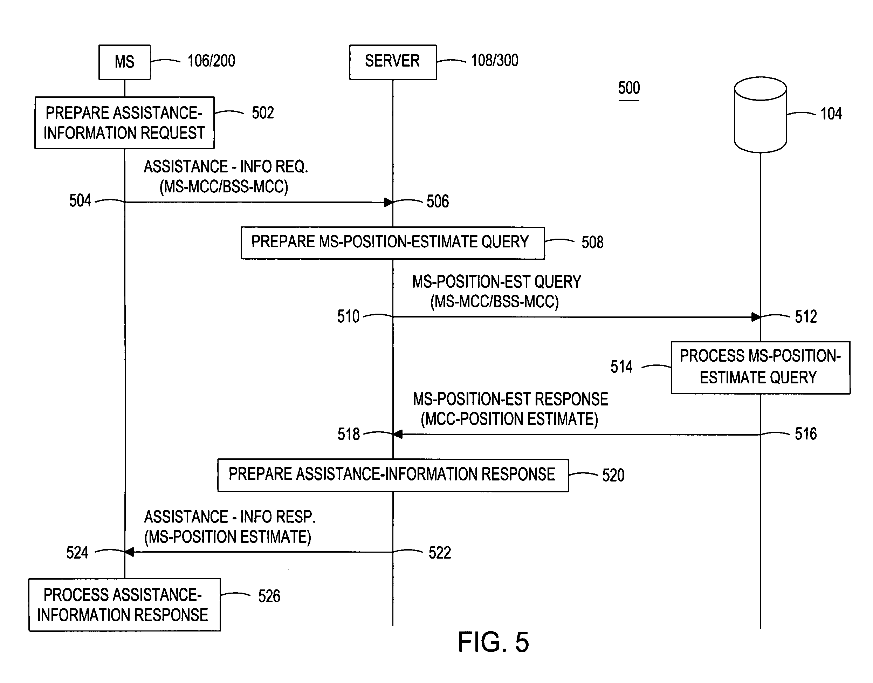

In addition, the memory 208 may be loaded with and store executable instructions or other code (e.g., software, firmware or other computer-executable instructions) for some or all of the process or function described herein. These executable instructions may include, for example, assistance-information software 228 and position-determining software 230 for performing some or all of the processes 400 and 500 illustrated in Figures 4 and 5 (below).

In addition, the memory 208 may store (and receive requests from the processor 206 to obtain) operands, operators, dimensional values, configurations, and other data that are used by processor 206 and the software to control the operation of and/or to facilitate performing the functions of the MS 200.

### Example Server Architecture

Referring now to Figure 3, a block diagram illustrating an example of a server 300 is shown. The server 300 may be representative of the server 108 of Figure 1. For convenience, the server 300 is described with reference to the system 100 of Figure 1.

The server 300 may be any computing device, system and the like, and may be formed in a single unitary device and concentrated on a single server, client, peer or other type node. Alternatively, the server 300 may be formed from one or more separate devices, and as such, may be distributed among a number of server, client, peer or other type nodes. In addition, the server 300 may be scalable (i.e., may employ scale-up and/or scale-out approaches).

As shown, the server 300 may include a processing platform 301 that is operable to control, manipulate or otherwise interact with the MS 106 and/or the data store 104, via the respective communication links. The processing platform 301 includes one or more processing units (collectively "processor") 302, input/output (I/O) circuits 304, support circuits 306, a memory 308, and a server clock 310.

The processor 302 may be one or more conventional processors, microprocessors, multi-core processors and/or microcontrollers. The support circuits 306 comprise well-known circuits that facilitate operation of the processor 302 and may include well-known circuitry or circuits, including, for example, an I/O interface; one or more network-interface units ("NIUs"); cache; clock circuits; power supplies; and the like.

The processor 302 may use the NIUs for exchanging the ms-server and/or the server-data store content via the communication network 110. Accordingly, the NIUs may be adapted for communicating over any of the terrestrial wireless, satellite, and/or wireline media.

The server clock 310 may be used to provide a time tag to indicate a time-of-arrival of pseudorange measurements transmitted from the MS 106 and/or MS 200. The memory 308 may be embodied as random access memory, read only memory, an erasable programmable read only memory and variations thereof, content addressable memory and variations thereof, flash memory, disk drive storage, removable storage, hard disc storage etc., and any combination thereof. The memory 308 may be loaded with and store executable instructions or other code (e.g., e.g., software, firmware or other computer-executable instructions) for any process or function described herein.

These executable instructions may include, for example, database software 314 adapted to provide an interface ("database interface") for exchanging the server-data-store content with the data store 104. The database software may be, for example, a client interface, such as a Database Connectivity Application Programming Interface and the like. This client interface may be operable to interface to any of an Oracle, DB2, Microsoft Access, Microsoft SQL Server, MySQL, 4th Dimension, FileMaker and the like database applications.

The executable instructions may also include assistance-data software 322 and position-determining software 320 for performing some or all of the processes 400and 500 illustrated in Figures 4 and 5 (below).

In addition to software, the memory 308 may store (and receive requests from the processor 302 to obtain) operands, operators, dimensional values, configurations, and other data that are used by processor 302 and the software to control the operation of and/or to facilitate performing the functions of the server 200, including, for example, the assistance data 318.

The server 300 via its I/O circuits 304 may receive the broadcasted measurements and information (e.g., ephemeris, code phase measurements, carrier phase measurements, Doppler measurements, etc.) from the external source. The server 300 may use the broadcasted measurements and information to generate or compute the assistance information and/or one or more previous or future versions of the assistance information.

The external source may be for example, a reference network, a satellite control station, Internet. The reference network, in general, is adapted to obtain and process the satellite signals from one, some or all of the satellites 102 so as to garner, produce or otherwise obtain broadcasted satellite-navigation information that may be distributed to the ms 106 as the assistance information. To facilitate this, the reference network may be embodied as a worldwide-reference network ("WWRN"); details of which are disclosed in any of the commonly-assigned, U.S. Patent Application Serial Nos.: 10/719,890, filed on November 21, 2003; 11/077,380, filed on March 3, 2005; 11/206,615, filed on August 18, 2005. As described in the detail therein, the reference network 102 may include a plurality of reference stations that are communicatively coupled to a network node.

The reference stations are typically at different known locations about the Earth's circumference at or near the Earth's surface, and are adapted to track (e.g., monitor characteristics of) the satellites 102 on a continuing basis. To facilitate such tracking, each of the reference stations may include a satellite-signal receiver, a processing platform and a transmitter. The satellite-signal receiver may be adapted to receive via an air interface the satellite signals broadcast from all or a subset of the satellites 102, and to provide such satellite signals to the processing platform.

The processing platform may be adapted to obtain from the satellite signals one or more satellite-navigation messages, and to collect, filter, store and/or otherwise process and/or provide to the transmitter the satellite-navigation messages. For example, the processing platform may filter and discard (or, alternately, store) and might not provide to the transmitter duplicate or repetitive occurrences of all or parts of the satellite-navigation messages (since much of the satellite-navigation messages from each of the satellite 102 is the same, and because the broadcasted satellite-navigation information is, typically, updated every two hours).

The transmitter is adapted to provide the broadcasted satellite-navigation messages to the network node via one or more communication links. The network node may include a receiver ("network-node receiver"), a processing platform ("network-node processor") and a transmitter ("network-node transmitter").

The network-node receiver may be adapted to receive the broadcasted satellite-navigation messages from each of the reference stations, and provide such broadcasted satellite-navigation messages to the network-node processor. The network-node processor may be adapted to decode, extract and/or otherwise obtain from the satellite-navigation messages the broadcasted satellite-navigation information associated with the satellites 102. The broadcasted satellite-navigation information may include, for example, broadcast ephemeris, broadcast clock information, code phase measurements, carrier phase measurements, Doppler measurements, almanac and the like.

In addition to obtaining the broadcasted satellite-navigation information, the network-node processor may be adapted to collect, filter, store and/or otherwise process the broadcasted satellite-navigation information. For example, the processing platform may filter and discard (or, alternately, store) and might not provide to the transmitter duplicate or repetitive occurrences of the broadcasted satellite-navigation information.

In addition, the network-node processor may be adapted to provide the broadcasted satellite-navigation information to the network-node transmitter. The network-node transmitter may be adapted to distribute, transmit or otherwise provide the broadcasted satellite-navigation information to the server 108.

The reference network 104 may, alternatively, be embodied in accordance with a second WWRN; details of which are disclosed in any of the commonly-assigned, U.S. Patent Nos.: 6,411,892; 6,813,560; 6,587,789; 6,704,651; 6,703,972; and U.S. Patent Application Serial Nos.: 10/359,468, filed on February 5, 2003; 11/428, 281, filed on June 20, 2006; 09/993,335, filed November 6, 2001; 10/926,792, filed August 26, 2004; and 10/349,493, filed January 22, 2003; each of which is incorporated by reference in its entirety.

As set forth in more the details, the second WWRN includes a plurality of reference stations and a network node having architectures similar those discussed above. The processing platforms of the tracking stations, however, may be adapted to decode, extract and/or otherwise obtain from the satellite signals the broadcasted satellite-navigation information associated with the satellites 102, and provide the broadcasted satellite-navigation information to the transmitters of the tracking stations. These transmitters are adapted to provide the broadcasted satellite-navigation information to the receiver of the network node, which in turn, is adapted to provide the broadcasted satellite-navigation information to the network-node processor.

The network-node processor may be adapted to collect, filter, store, and/or otherwise process the broadcasted satellite-navigation information. In addition, the network-node processor may be adapted to provide the broadcasted satellite-navigation information to the network-node transmitter. The network-node transmitter may be adapted to distribute, transmit or otherwise provide the broadcasted satellite-navigation information to the server 108.

In any embodiment, the reference network 104 may be adapted to provide to the server 108 the broadcasted satellite-navigation information from all or less than all of the satellites 102. To facilitate this, the network-node processor and/or the processing platforms of the tracking stations may be adapted to segregate or otherwise separate the broadcasted satellite-navigation information into one or more subsets. Each of the subsets may include, for example, the broadcasted satellite-navigation information associated with (i) one or more of the satellites 102, (ii) a particular geographic region of the world, (iii) a given point in time or time period, (iv) a combination thereof, (v) etc.

In addition, the satellite-navigation data may include one or more of the predicted pseudoranges and/or a model of such predicted pseudoranges ("pseudorange model"). Accordingly, the server 108 may obtain and distribute the predicted pseudoranges and/or the pseudorange model. Details of one or more examples of a system for distributing and using predicted pseudoranges and/or a pseudorange model to acquire satellite signals is described in United States patent 6,453,237, issued September 17, 2002, which is incorporated by reference herein in its entirety.

As another alternative, the server 108, via its I/O circuits 304, may be adapted to obtain and distribute other types of assistance information along with or instead of the broadcasted satellite-navigation information. The other types of assistance information may include, for example, the acquisition-assistance information to assist in acquiring the satellite signals; other types of the satellite-navigation information, including, for example, the LTO information, and other information that the may be used to acquire the satellite signals and/or determine the MS position.

The server 108 may, for example, be adapted to obtain the LTO information from an external source, such as is described in commonly assigned U.S. Patent Nos. 6,542,820, 6,560,534, 6,651,000 and/or 6,829,535; and U.S. Patent Application Serial Nos. 10/674,267, filed September 9, 2003, and 11/057,060, filed February 11, 2005; all of which are incorporated herein by reference in their entirety.

The server 300, via its database software, may also be adapted to obtain the MS-position estimate from the data store 104, and distribute it to the MS 104. As described in more detail below with respect to Figure 4, the server 300 may do so responsive to the assistance-information request, the MS-position-estimate query and the MS-position-estimate response.

Example Operation

Figure 4 is a flow diagram illustrating an example process 400 for determining a position of a mobile station. For convenience, the process 400 is described herein with respect to the architecture shown in Figures 1-3. The process 400 may be carried out in other architectures as well.

In addition, the process 400 may be carried out in as part of, in combination with, in *lieu* of or as a supplement to another process for determining the MS position, such as can be found in one or more of U.S. Patent Nos.: 6,453,237; 6,411,892; 6,806,346; 6,704,348; 6,542820; 6,560,534; 6,651,000; 6,829,535; 6,975,266; 6,992,617; 7,053,824; 7,133,772; 7,158,080; and 7,158,882; and/or U.S. Patent Application Serial Nos.: 10/719,890; 11/277,943; 11/567,629; 11/311,842; 11/261,413; and 11/655,786; each of which is incorporated herein by reference.

The process 400 starts at termination block 402 after the MS 200 obtains and stores in memory 208 the satellite-measurement data (e.g. the pseudorange measurements) obtained from the satellite signals acquired from the satellites 102 via the satellite-signal receiver 202. To facilitate this, the satellite-signal receiver 202 may tune to appropriate channels for receiving the satellite signals from one or more of the satellites 10 that should be in-view of the MS 200 ("in-view" satellites). By tuning to the appropriate channels, the satellite-signal receiver 202 may acquire the satellite signals of the in-view satellites ("in-view-satellite signals"), and in turn, measure the satellite-measurement data, e.g. the pseudorange measurements to the in-view satellites.

The satellite-signal receiver 202 may acquire the satellite signals responsive to MS 200 requesting and obtaining the acquisition-assistance information from the server 108 via the wireless transceiver 204 and the communication network 110. For example, the MS 200 may obtain one or more expected or predicted pseudoranges (hereinafter "predicted pseudoranges"), to assist in acquisition of the satellite signals. After acquiring the satellite signals, the MS 200 may measure and transmit the pseudorange measurements to the server 300 over the communication network 110.

After the termination block 402, the process 400 transitions to process block 404. At process block 404, the MS 200 obtains the MS-position estimate from the server 300 via the communication network 110. As described in more detail with respect to Figure 5, the MS 200 may obtain the MS-position estimate responsive to the assistance-information request. The MS-position estimate may include the population centroid; the population centroid and the pop-uncertainty measure; the geographic centroid, the geographic centroid and the geo-uncertainty measure, and/or any combination thereof.

After process block 404, the process 400 may transition to process block 408. Alternatively, the process 400 may transition to decision block 406 if the MS-position estimate includes (i) the population centroid and the pop-uncertainty measure or (ii) the geographic centroid and the geo-uncertainty measure.

At decision block 406, the MS 200 makes a determination as to whether the MS-position estimate is an accurate estimate of the MS position. If the MS 200 makes the determination in the affirmative ("affirmative determination"), then the process 400 transitions to process block 408. If, however, the MS 200 makes the determination is the negative ("negative determination"), then the process 400 transitions to process block 410.

The MS 200 may make the determination as a function of (i) the pop-uncertainty measure or (ii) the geo-uncertainty measure. For instance, the MS 200 may make the affirmative determination when the pop-uncertainty measure (or the geo-uncertainty measure) satisfies a given threshold. Alternately, the MS 200 may make the negative determination when the pop-uncertainty measure (or the geo-uncertainty measure) does not satisfy the given threshold.

This threshold may be satisfied, for example, when the pop-uncertainty measure (or the geo-uncertainty measure) exhibits the high or in-between likelihood. Alternatively, the threshold may be satisfied when the pop-uncertainty measure (or the geo-uncertainty measure) exhibits the in-between likelihood that is above a given likelihood.

The threshold may not be satisfied when the pop-uncertainty measure (or the geo-uncertainty measure) exhibits the low likelihood or the in-between likelihood that is below the given likelihood. The threshold may or may not be satisfied in other ways as well.

At process block 410, the MS 200 discards the MS-position estimate as a result of the MS 200 making the negative determination. After process block 410, the process 400 may transition to termination block 412.

At process block 408, the MS 200 uses the MS-position estimate as the MS position. If the MS-position estimate includes the population centroid, for example, then the MS 200 may use the population centroid as the MS position, and may, for example, report the position to a user of the MS 200 or alternatively use it for location-based services or other applications.

As another alternatively, the MS 200 may use the population centroid or the geographic centroid, as a rough estimate of MS position (e.g., an "initial position fix"); and along with the satellite-measurement data stored in memory 208, determine one or more additional position fixes. The MS 200 may do this to refine the initial and additional position fixes into an accurate MS position.

The MS 200 may determine whether to use the population centroid or the geographic centroid as the rough estimate of MS position as a function of the pop-uncertainty measure or the geo-uncertainty measure, respectively. For example, the MS 200 may use the population centroid or the geographic centroid as the rough estimate of MS position when the pop-uncertainty measure or the geo-uncertainty measure, respectively, does not satisfy the given threshold. Alternatively, the MS 200 may use the population centroid or the geographical centroid as the rough estimate of MS position when the pop-uncertainty measure or the geo-uncertainty measure, respectively, exhibits the in-between or low likelihoods. The MS 200 may determine whether to use the population centroid or the geographic centroid as the rough estimate of MS position in other ways as well.

After process block 408, the process 400 may transition to termination block 412. At termination block 412, the process 400 ends. Alternatively, the process 400 may be repeated periodically, in continuous fashion, or upon being triggered as a result of a condition, such as upon an additional request for assistance information or responsive to an input from the user (man or machine) of the MS 200.

Although the foregoing describes the process 400 being carried out by the MS 200, the process 400 may also be carried out by the server 300. For example, the server 300 (before the termination block 402) may be operating in the MS-assisted mode, and receive the satellite-measurement data from the MS 200 prior to the start of process 400. At process block 404, the server 300 may obtain the MS-position estimate from the data store 104. At decision block 406, the server 300 may make the affirmative determination or the negative determination as to whether the MS-position estimate is an accurate estimate of the MS-position. At decision block 408, the server 300 may use the MS-position estimate as the MS position or as the rough estimate of the MS position, and forward the MS-position estimate to the MS 200 or to another requestor (not shown). At process block 410, the server 300 may discard the MS-position estimate as a result of the negative determination. And at termination block 412, the server 300 may terminate the process 400 or cause the process 400 to be repeated.

As another alternative, the process 400 may be carried out in part by the MS 200 and in part by the server 300. For example, the server 300 may carry out process blocks 404-410 and the MS 200 may carry out process block 402. Alternatively, the server 300 and MS 200 may both carry out process block 404 and the MS may carry out process blocks 406-410. Other combinations are possible as well.

In addition, the MS 200 may obtain the MS-position estimate in response to the request for acquisition assistance information (i.e., before termination block 402). The MS 200 may use the MS-position estimate along with acquisition-assistance information to determine which of the satellite 102 are the in-view satellites, and thereby, allow the MS 200 to acquire the satellite signals of the in-view satellites. For example, the MS 200 may use the MS-position estimate to (i) develop a search window for quickly detecting the in-view satellites, and (ii) improve the sensitivity of the satellite-signal receiver 202 by enabling it to discern from noise attenuated satellite signals that would be otherwise undetectable or able to be processed.

Referring now to Figure 5, a message flow diagram illustrating an example process 500 for determining a position of a mobile station is shown. For convenience, the process 500 is described herein with respect to the architecture shown in Figures 1-4. The process 500 may be carried out in other architectures as well.

In addition, the process 500 may be carried out in as part of, in combination with, in *lieu* of or as a supplement to another process for determining the MS position, such as can be found in one or more of U.S. Patent Nos.: 6,453,237; 6,411,892; 6,806,346; 6,704,348; 6,542820; 6,560,534; 6,651,000; 6,829,535; 6,975,266; 6,992,617; 7,053,824; 7,133,772; 7,158,080; and 7,158,882; and/or U.S. Patent Application Serial Nos.: 10/719,890; 11/277,943; 11/567,629; 11/311,842; 11/261,413; and 11/655,786; each of which is incorporated herein by reference.

As shown at process block 502, the MS 200 prepares the assistance-information request for transmission to the server 300. To facilitate the preparation, the MS 200 obtains the MS-MCC from the memory 208 and/or obtains the BSS-MCC from the communication network 110 via the transceiver 204, and places, incorporates or otherwise includes (collectively "places") the MS-MCC and/or the BSS-MCC in assistance-information request.

The MS 200 may, for example, place the MS-MCC in the assistance-information request when operating in the home network or when the MS-MCC matches or otherwise corresponds to the same MCC country associated with the BSS-MCC. Alternatively, the MS 200 may place the BSS-MCC in the assistance-information request when operating in the roaming network or when the MS-MCC does not matche or otherwise correspond to the same MCC country associated with the BSS-MCC. In this way, the assistance-information request includes a mobile country code that matches the MCC country in which the MS 200 is operating.

At reference 504, the MS 200 sends the assistance-information request to the server 300 via the communication network 110. At reference 506, the server 300 receives the assistance-information request.

At process block 508, the server 300 prepares the MS-position-estimate query for transmission to the data store 104. To facilitate this, the server 300 may extract the MS-MCC and/or the BSS-MCC from the assistance-information request, and place it in the MS-position-estimate query. Alternatively, the server 300 may place the assistance-information request into the MS-position-estimate query without extracting the MS-MCC and/or the BSS-MCC.

At reference 510, the server 300 sends the MS-position-estimate query to the data store 104 via the communication network 110. As noted above, the server 300 and the data store 104 may be communicatively coupled via a bus or other type of communication link. As such, the server 300 may send the MS-position-estimate query via such bus or communication link.

At reference 512, the data store 104 receives the MS-position-estimate query. At process block 514, the data store 104 processes the MS-position-estimate query. To facilitate this, the data store 104 (via its database server) extracts the MS-MCC and/or the BSS-MCC from the MS-position-estimate query. If the MS-position-estimate query includes the assistance-information request, the data store 104 (via its database server) may extract the assistance-information request, first, and then, extract the MS-MCC and/or the BSS-MCC from the assistance-information request.

After extracting the MS-MCC and/or BSS-MCC, the data store 104 (via its database server) compares the MS-MCC and/or BSS-MCC to one or more of the data-store MCCs. If the MS-MCC and/or BSS-MCC matches one or more of the data-store MCCs, then the data store 104 via its database server prepares the MS-position-estimate response by placing one or more of the MCC-position estimates that corresponding to the data-store MCCs that match the MS-MCC and/or BSS-MCC. As noted above, each of the MCC-position estimates may include any of the population centroid; the population centroid and the pop-uncertainty measure; the geographic centroid, the geographic centroid and the geo-uncertainty measure, and/or any combination thereof.

At reference 516, the data store 104 sends the MS-position-estimate response to the server 300 via the communication network 110. At reference 518, the server 300 receives the MS-position-estimate response from the data store 104.

At process block 520, the server 300 prepares the assistance-information response. To facilitate this, the server 300 extracts the MCC-position estimates from the MS-position-estimate response. If any of the MCC-position estimates includes the pop-uncertainty measure or the geo-uncertainty measure, then the server 300 may carry out the decision block 406 and the process block 410 of process 400. Alternatively, the server 300 might not carry out the decision block 406 and the process block 410 of process 400, leaving such decisions to the MS 200.

After extraction, the server 300 places one or more of the MCC-position estimates in the assistance-information response as the MS-position estimate. At reference 522, the server 108 sends assistance-information response to the MS 200 via the communication network 110.

At reference 524, the MS 200 receives the assistance-information response. At process block 526, the MS 200 process the assistance-information response. To facilitate this, the MS 200 extracts the MS-position estimate from the assistance-information response. After extracting the MS-position estimate, the MS 200 may carry out process 400 of Figure 4 as described above. Alternatively, the MS 200 may carry out only portions of process 400. For example, the MS 200 might not carry out the decision block 406 and the process block 410 of process 400.

Although the foregoing described the message flow 500 with respect to MS 200 and server 300, the message flow 500 may be carried out using MS 104, server 108 or any other similarly configured devices. In addition, MS 200 may send the assistance-information request to obtain acquisition-assistance information, broadcasted satellite-navigation information and/or other types of the satellite-navigation information, including, for example, LTO information.

Conclusion

Those skilled in the art will appreciate that the present invention, according to its various embodiments, provides for navigation in short time intervals in cases of inaccurate or incomplete assistance information. For example, embodiments of the present invention may be used in an emergency communication network, such as an emergency-calling system. To be useful, the emergency-calling system needs know the MS position when the MS 200 is in need of emergency services.

Although the foregoing has been described with reference to satellites, it will be appreciated that the teachings are equally applicable to positioning systems that utilize pseudolites or a combination of satellites and pseudolites. Pseudolites are ground-based transmitters that broadcast a PN code (similar to the satellite signal) that may be modulated on an L-band carrier signal, generally synchronized with GPS time.

Variations of the method, apparatus and system described above are possible without departing from the scope of the invention. In view of the wide variety of embodiments that can be applied, it should be understood that the illustrated embodiments are exemplary only, and should not be taken as limiting the scope of the following claims. For instance, in the exemplary embodiments described herein include handheld devices, which may include or be utilized with any appropriate voltage source, such as a battery and the like, providing any appropriate voltage.

In addition, any communication network referenced may include portions of wireless voice and packet-data networks, such as 1 G, 2G, 2.5G and 3G telecommunication networks, wireless office telephone systems ("WOTS") and/or wireless local area networks (WLANs), including, Bluetooth and/or IEEE 802.11 WLANs, and the like. In addition, such communication network may be configured in accordance with any communication protocols such as Advanced Mobile Phone Service ("AMPS"), Time Division Multiple Access ("TDMA"), Global System for Mobile Communications ("GSM"), and Code Division Multiple Access ("CDMA"), Universal Mobile Telecommunications Service ("UMTS"), Wide-band CDMA ("WCDMA"), ultra wideband CMDA, CDMA2000, Generic Packet Radio Services ("GPRS"), Telecommunications Industry Association's ("TIA") IS-94 specifications, and any combination or variation thereof.

The communication protocols may also include any WLAN, WMAN, and/or PAN protocols, which may include any of the commonly used protocols, such as the IEEE 802.11 et seq.; IEEE 802.16 protocol, the IEEE 802.15 protocol, the ZigBee specification, the Bluetooth Specification, the WOTS specification, the HiperLAN specification, the HomeRF specification and/or any other wireless-networking protocol that promulgates rules to use freely-available, unlicensed spectrum, which in the United States includes the Industrial, Scientific, and Medical ("ISM") bands. Furthermore, the communication protocols may include one or more protocols for hypertext-markup language ("HTML"), extensible-markup language ("XML"), Virtual Reality Modeling Language ("VRML"), file transfer protocol ("FTP"), simple-mail-transfer protocol ("SMTP"), session-initiation protocol ("SIP"), etc.

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the exemplary embodiments are not limited to the above-mentioned platforms or CPUs and that other platforms and CPUs may support the described methods.

The data bits may also be maintained on a computer readable medium including magnetic disks, optical disks, and any other volatile (e.g., Random Access Memory ("RAM")) or non-volatile (e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It should be understood that the exemplary embodiments are not limited to the above-mentioned memories and that other platforms and memories may support the described methods.

Exemplary embodiments have been illustrated and described. Further, the claims should not be read as limited to the described order or elements unless stated to that effect. In addition, use of the term "means" in any claim is intended to invoke 35 U.S.C. §112, ¶ 6, and any claim without the word "means" is not so intended.

## Claims

1. A method comprising:
obtaining an estimate of position associated with a mobile-country code, wherein the mobile-country code is associated with a given country, and wherein the estimate of position associated with a mobile-country code comprises a measure of uncertainty; and
using the estimate of position associated with a mobile-country code as a position of a mobile station when the measure of uncertainty satisfies a given threshold.

2. The method of claim 1, wherein the position associated with a mobile-country code further comprises a centroid of population, and wherein the measure of uncertainty comprises a measure of uncertainty associated with the centroid of population.

3. The method of claim 1, wherein the position associated with a mobile-country code further comprises a centroid of geography, and wherein the measure of uncertainty comprises an uncertainty measure associated with the centroid of geography.

4. A method comprising:
obtaining a centroid of a population, wherein the centroid is associated with a mobile-country code, and wherein the mobile-country code is associated with a given network; and
using the centroid as a position of a mobile station.

5. The method of claim 4, wherein the centroid comprises an estimate of a position of the mobile station, the method further comprising: determining, as a function of the estimate, a second position of the mobile station.

6. The method of claim 4, wherein the centroid comprises an estimate of a position of the mobile station, the method further comprising:
obtaining at least one pseudorange to a satellite; and
determining, as a function of the at least one pseudorange and the estimate, a second position of the mobile station.

7. A method comprising:
sending a request for a position of a mobile station, wherein the request includes a mobile-country code associated with a given network; and
receiving a response to the request, wherein the response includes the position, and wherein the position comprises a centroid of a population that is associated with the mobile-country code.

8. An server comprising:
memory adapted to store executable instructions to:
obtain a centroid of a population, wherein the centroid is associated with a mobile-country code, and wherein the mobile-country code is associated with a given network; and
use the centroid as a position of a mobile station; and
a processor adapted to obtain from memory and to execute the executable instructions.

9. The server of claim 8, wherein the centroid comprises an estimate of a position of the mobile station, and wherein the memory is further adapted to store executable instructions to determine, as a function of the estimate, a second position of the mobile station.

10. An apparatus comprising:
memory adapted to store executable instructions to:
send a request for a position of a mobile station, wherein the request includes a mobile-country code associated with a given country; and
receive a response to the request, wherein the response includes the position, and wherein the position comprises a centroid of a population that is associated with the mobile-country code; and
a processor adapted to obtain from memory and to execute the executable instructions.
